# EUROPÄISCHE PATENTANMELDUNG

(11) **EP 1 531 447 A2**
(43) Veröffentlichungstag der Anmeldung: **18.05.2005**
(21) Anmeldenummer: 04026341.0
(22) Anmeldetag: 05.11.2004
(51) Int. Cl.: G09B 29/00, G09B 29/10

(54) **Geographische Karte mit integrierter Lupe**

(30) Priorität: 11.11.2003 DE 20317468 U
(71) Anmelder: Höfer Verlag, 63128 Dietzenbach (DE)
(72) Erfinder: Höfer Klaus G., 63128 Dietzenbach (DE)
(74) Vertreter: Patentanwälte Hauck, Graalfs, Wehnert, Döring, Siemons, Schildberg

(57) **Zusammenfassung**

Es wird eine geographische Karte, insbesondere Landkarte, mit einem Kartendeckel und einem mit diesem verbundenen, zusammengefalteten Kartenwerk beschrieben, wobei der Kartendeckel einen nach innen umgeklappten, abtrennbaren Abschnitt aufweist, in den eine zum Betrachten des Kartenwerkes geeignete Lupe als Fenster integriert ist und der einen einen Handgriff für die Lupe bildenden Bereich aufweist. Der abtrennbare Abschnitt des Kartendeckels besitzt einen schmalen länglichen Handgriffteil und einen gegenüber diesem erweiterten, die Lupe als Fenster enthaltenden Lupenteil. Im Kartendeckel sind zwei benachbarte Einschnitte zum Einschieben und Fixieren des Handgriffteiles mit der Lupe am Kartendeckel vorgesehen.

## Beschreibung

Die vorliegende Erfindung betrifft eine geographische Karte, insbesondere Landkarte, mit einem Kartendeckel und einem mit diesem verbundenen, zusammengefalteten Kartenwerk, wobei der Kartendeckel einen nach innen umgeklappten, abtrennbaren Abschnitt aufweist, in den eine zum Betrachten des Kartenwerkes geeignete Lupe als Fenster integriert ist und der einen einen Handgriff für die Lupe bildenden Bereich aufweist.

DieErfindungbefaßt sich mit allen Arten von geographischen Karten, wie beispielsweise Landkarten, Stadtplänen, die einen das eigentliche zusammengefaltete Kartenwerk abdeckenden Deckel aufweisen. Bei solchen Karten besteht der Deckel gewöhnlich aus einer Vorderseite und einer Rückseite, die über einen Klappabschnitt miteinander verbunden sind, über den sie über 180° aufeinander- und auseinanderklappbar sind. Die Deckelabschnitte weisen jeweils eine Lasche auf, mit der jeweils ein Abschnitt des zusammengefalteten Kartenwerkes verklebt ist.

Es ist bekannt, Karten mit Hilfe von Lupen zu betrachten, wobei derartige Lupen ein von der Karte unabhängiges Hilfsmittel bilden. Da die hier in Rede stehenden Karten auf Autofahrten, Fahrradtouren u.dgl. mitgeführt werden, ist es umständlich, zum Betrachten der Karte zusätzlich eine Lupe mitführen zu müssen. Eine solche Lupe nimmt zusätzlichen Platz ein und wird in einer Vielzahl von Fällen schlichtweg vergessen.

Aus der DE-U 295 05 902 ist eine geographische Karte der eingangs wiedergegebenen Art bekannt. Bei dieser Karte ist das vorstehend angesprochene Problem gelöst, da die Lupe direkt in den Kartendeckel integriert ist. Bei Bedarf wird der nach innen umgeklappte, abtrennbare Abschnitt des Kartendeckels, in den die Lupe integriert ist, vom Kartendeckel abgetrennt, so daß die Lupe zum Betrachten des Kartenwerkes gehandhabt werden kann. Damit entfällt das lästige Mitführen einer üblichen aufwendig gestalteten Lupe, wie sie in den meisten Haushalten vorhanden ist.

Zur Verbesserung der Handhabbarkeit der Lupe weist der abtrennbare Abschnitt des Kartendeckels einen einen Handgriff für die Lupe bildenden Bereich auf. Dieser Bereich kann zum Gebrauch der Lupe ergriffen werden und ermöglicht eine Handhabung der Lupe ohne Beschädigung derselben.

Bei der bekannten Karte ist der nach innen umgeklappte, abtrennbare Abschnitt des Kartendeckels rechteckig ausgebildet. Der die Lupe enthaltende Bereich und der den Handgriff bildende Bereich des abtrennbaren Abschnittes besitzen hierbei die gleiche Breite. Um nach dem Gebrauch der Lupe diese wieder am Kartendeckel befestigen zu können, weist gemäß der vorstehend erwähnten Veröffentlichung der abtrennbare Abschnitt des Kartendeckels und/oder der Kartendeckel selbst ein Fixiermittel auf, bei dem es sich beispielsweise um einen Selbstklebestreifen oder einen Klettverschluß handeln kann. Darüber hinaus ist in der genannten Veröffentlichung darauf hingewiesen, daß eine Möglichkeit zur Befestigung der Lupe in dem abtrennbaren Abschnitt des Kartendeckels darin besteht, in der Pappe oder im Papier des abtrennbaren Abschnittes Einschnitte vorzusehen, in die die Lupe eingeschoben und festgeklemmt wird. Eine solche Art der Befestigung kann auch dazu verwendet werden, um den mit der Lupe versehenen abtrennbaren Abschnitt nach dem Gebrauch wieder am Kartendeckel zu befestigen. Wie dabei die Befestigung des relativ breit ausgebildeten rechteckigen abtrennbaren Abschnittes im einzelnen erfolgen soll; ist jedoch nicht erwähnt.

Der vorliegenden Erfindung liegt die Aufgabe zugrunde, eine geographische Karte der angegebenen Art zu schaffen, bei der sich die Lupe besonders einfach und bequem handhaben und aufbewahren läßt.

Diese Aufgabe wird erfindungsgemäß bei einer geographischen Karte der angegebenen Art dadurch gelöst, daß der abtrennbare Abschnitt des Kartendeckels einen schmalen länglichen Handgriffteil und einen gegenüber diesem erweiterten, die Lupe als Fenster enthaltenden Lupenteil aufweist und daß im Kartendeckel zwei benachbarte Einschnitte zum Einschieben und Fixieren des Handgriffteiles mit der Lupe am Kartendeckel vorgesehen sind.

Bei der erfindungsgemäßen Lösung ist daher der Handgriffteil als schmaler länglicher Abschnitt ausgebildet, um einerseits ein einfaches und bequemes Handhaben der Lupe zu ermöglichen, andererseits jedoch auch eine einfache und praktische Befestigung des abtrennbaren Abschnittes (der Lupe) am Katendeckel zu gestatten. Dieser schmale längliche Handgriffteil wird nämlich zum Befestigen der Lupe in einen im Kartendeckel vorgesehen Einschnitt eingeschoben, bis zum Erreichen des zweiten Einschnittes vorgeschoben und dann durch den zweiten Einschnitt nach vorne hindurch bewegt, so daß sich ein gewünschter Klemmeffekt zur Fixierung des Handgriffteiles am Kartendeckel ergibt. Dadurch, daß sich der Lupenteil gegenüber dem Handgriffteil erweitert, kann der Handgriffteil nur so weit eingeschoben werden, bis der erweiterte Lupenteil den ersten Einschnitt erreicht. Hierdurch wird ein Durchschieben des abtrennbaren Abschnittes durch die Einschnitte verhindert. Ferner kann der abtrennbare Abschnitt nicht in Einschubrichtung aus den Einschnitten wieder herausfallen.

Die Einschnitte sind vorzugsweise so lang ausgebildet, daß sie geringfügig länger sind als der Handgriffteil breit ist. Auf diese Weise kann der Handgriffteil bequem in die Einschnitte geschoben werden, andererseits wird hierdurch ein ausreichender Klemmeffekt zum Fixieren des Handgriffteiles erzielt. Wenn die Einschnitte zu lang ausgebildet sind, wird zwar das Einschieben des Handgriffteiles vereinfacht, jedoch nur eine relativ lose Aufnahme des Handgriffteiles erreicht.

Die spezielle Form des eigentlichen Lupenteiles ist nicht kritisch. Wesentlich ist, daß sich dieser gegenüber dem Handgriffteil erweitert, um die Form einer Lupe mit Handgriff nachzubilden und eine entsprechend großflächige Lupe verwenden zu können. Da der Handgriffteil gegenüber dem Lupenteil entsprechend schmal ist, erfolgt die Brweiterung des Lupenteiles gegenüber dem Handgriffteil nur einseitig, da ja auch der Handgriffteil mit dem Kartendeckel verbunden sein muß. Da die Lupe selbst vorzugsweise rund oder quadratisch bzw. rechteckig ausgebildet ist, hat der Lupenteil vorzugsweise eine an die Form der Lupe angepaßte Form und ist ebenfalls kreisförmig bzw. teilkreisförmig oder quadratisch bzw. rechteckig ausgebildet. Bei einer besonders bevorzugten Ausführungsform ist der abtrennbare Abschnitt insgesamt P-förmig ausgebildet.

Damit sich der abtrennbare Abschnitt des Kartendeckels einwandfrei als Lupe handhaben und wieder am Kartendeckel fixieren läßt, ist dieser vorzugsweise gegenüber dem restlichen Teil des Kartendeckels versteift, beispielsweise doppellagig ausgebildet. Die Lupe selbst ist als Flachlupe und dabei vorzugsweise als Folie ausgebildet. Sie hat die Form eines Fensters, das im Lupenteil des abtrennbaren Abschnittes des Kartendeckels vorgesehen ist. Bei der doppellagigen Ausbildung des abtrennbaren Abschnittes befindet sich die Lupenfolie vorzugsweise zwischen beiden Abschnitten und ist dort festgeklebt, wobei die beiden Abschnitte entsprechende Ausschnitte für die Lupe aufweisen.

Um eine einfache und bequeme Handhabung des abtrennbaren Abschnittes des Kartendeckels zu ermöglichen, ist dieser vorzugsweise abreißbar ausgebildet. Eine entsprechende Perforationslinie ist an der Abreißstelle vorgesehen. Nach dem Abreißen läßt sich der abtrennbare Abschnitt des Kartendeckels in der Form einer Lupe handhaben. Der abtrennbare Abschnitt kann an sich überall am Kartendeckel ausgebildet sein. Vorzugsweise geht er von einer Stirnseite des Kartendeckels aus, d.h. von der Stirnseite von dessen Vorderseite oder von dessen Rückseite. Bei einer besonders bevorzugten Ausführungsform ist der abtrennbare Abschnitt an der Rückseite des Kartendeckels befestigt, und zwar vorzugsweise an dessen Stirnseite. Im nach innen geklappten Zustand befindet er sich daher zwischen der Rückseite des Kartendeckels und dem eigentlichen Kartenwerk.

Des weiteren ist der abtrennbare Abschnitt vorzugsweise mit einer Längenmeßskala versehen, und zwar zweckmäßigerzweise an der Seite, an der er abgetrennt worden ist.

Da der die Lupe aufweisende abtrennbare Abschnitt des Kartendeckels im ungebrauchten Zustand der Lupe nach innen zwischen die Rückseite des Deckels und das eigentliche Kartenwerk gefaltet ist, sieht die Karte äußerlich genauso aus wie eine herkömmliche Karte ohne Lupe. Da die Lupe als Flachlupe, speziell als Folie, ausgebildet ist, kann sie ohne weiteres im bzw. am abtrennbaren Abschnitt des Kartendeckels angebracht werden, ohne daß der Deckel hierdurch eine Ausbauchung erfährt. Hierdurch besitzt die neuerungsgemäß ausgebildete Karte im wesentlichen die gleiche Form wie eine herkömmlich ausgebildete Karte.

Die erfindungsgemäße Art der Fixierung der Lupe (des abtrennbaren Abschnittes) am Kartendeckel, vorzugsweise an der Innenseite der Rückseite desselben, ist sehr einfach und ohne großen zusätzlichen Aufwand zu bewerkstelligen. So können zusätzliche Fixiermittel, wie Klebebänder etc., entfallen, und es müssen in den Kartendeckel lediglich zwei Einschnitte eingestanzt werden. Diese Einschnitte sind zwar von der Außenseite der Rückseite des Deckels her sichtbar, jedoch stellen sie keine wesentliche Beeinträchtigung dar.

DieErfindungwird nachfolgend anhand eines Ausführungsbeispieles in Verbindung mit der Zeichnung im einzelnen erläutert. Es zeigen:
- Figur 1: eine Ausführungsform einer erfindungsgemäß ausgebildeten geographischen Karte im aufgeklappten Zustand in räumlicher Ansicht;
- Figur 2: eine Ansicht eines Teiles der Innenseite der Rückseite der Karte der Figur 1; und
- Figur 3: eine Ansicht wie Figur 2, wobei jedoch der abtrennbare Abschnitt vom Kartendeckel entfernt und an der Innenseite der Rückseite des Deckels fixiert worden ist.

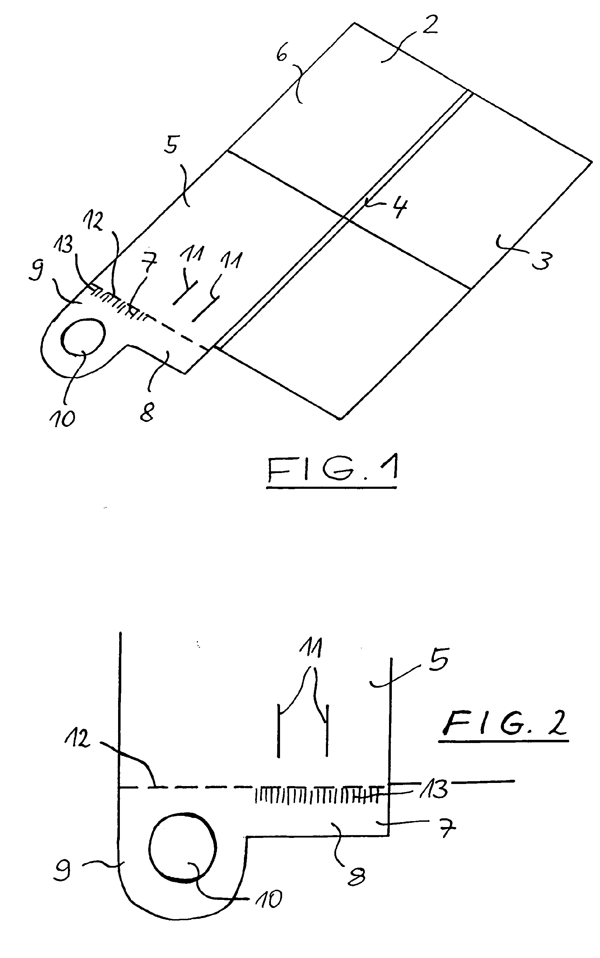

Die in Figur 1 dargestellte geographische Karte 1 besteht aus einem Kartendeckel 2 und dem eigentlichen zusammengefalteten Kartenwerk 3, das über einen geeigneten Falz 4 mit dem Deckel verklebt ist. Der Kartendeckel besitzt eine Vorderseite 2 und eine Rückseite 5, die über eine Faltkante miteinander verbunden sind. In Figur 1 sind von der Vorderseite 2 und Rückseite 5 des Kartendeckels die dem Kartenwerk 3 zugewandten Innenseiten des Deckels dargetellt.

Die Rückseite 5 des Kartendeckels 2 besitzt einen abtrennbaren Abschnitt 7, der über eine Perforationslinie 12 vom restlichen Teil des Deckels abgeteilt ist. Der abtrennbare Abschnitt 7 ist somit als Verlängerung der Deckelrückseite 5 ausgebildet, wobei diese Verlängerung 7 nach innen parallel zur Deckelrückseite 5 gefaltet ist, wenn sich die Karte im unbenutzten Zustand befindet. Im zusammengeklappten Zustand der Karte befindet sich daher die Verlängerung 7 zwischen der Rückseite 5 und dem Kartenwerk 3, so daß sie nicht stört. Die Verlängerung erstreckt sich über die gesamte Länge der Stirnseite der Deckelrückseite 5, wobei die Faltkante, wie erwähnt, mit einer geeigneten Perforationslinie 12 versehen ist, über die der Abschnitt 7 vom Kartendeckel abgetrennt werden kann.

Der abtrennbare Abschnitt 7 besitzt die Form eines P und weist einen länglichen schmalen Handgriffteil 8 und einen dem gegenüber erweiterten teilkreisförmigen Lupenteil 9 auf, in dessen Mitte eine Folienlupe 10 angeordnet ist. Der abtrennbare Abschnitt 7 ist doppelwandig ausgebildet, wobei die Folienlupe 10 zwischen beiden Wandungen verklebt ist. Beide Wandungen besitzen eine kreisförmige Ausnehmung, in der sich die Folienlupe 10 befindet.

Im unbenutzen Zustand ist die durch den abtrennbaren Abschnitt 7 gebildete Lupe nach innen parallel zur Deckelrückseite 5 gefaltet. Wenn der Benutzer die Lupe gebrauchen will, faltet er die Karte in die in Figur 1 dargestellte Lage und klappt den abtrennbaren Abschnitt 7 nach außen. In dieser Position kann er den abtrennbaren Abschnitt 7 entlang der Perforationslinie 12 abreißen. Er kann ihn dann als Lupe handhaben, um Einzelheiten der Karte besser betrachten zu können. Dabei ergreift er die Lupe mit dem Handgriffteil 8 und handhabt den entsprechenden Deckelabschnitt, wie dies bei einer Lupe der Fall ist.

Um den abtrennbaren Abschnitt 7 nach Gebrauch wieder am Deckel 2 befestigen zu können, sind zwei parallele und im Abstand voneinander angeordnete Einschnitte 11 in der Rückseite des Deckels vorgesehen. Durch diese Einschnitte 11 wird der Handgriffteil 8 der Lupe geschoben, wodurch die Lupe am Deckel festgeklemmt wird. Dabei wird der Handgriffteil 8 zuerst in den in der Figur links dargestellten Einschnitt hinein- und dann aus dem in der Figur rechts dargestellten Einschnitt wieder herausbewegt, so daß der abtrennbare Abschnitt 7 (Lupe) einen festen Sitz an der Innenseite der Rückseite des Deckels erhält. Das Kartenwerk 3 kann dann wieder in den Deckel eingeklappt werden, wobei der abtrennbare Abschnitt 7 zwischen der Rückseite des Deckels und dem Kartenwerk zu liegen kommt. Im zusammengefalteten Zustand ist daher die Lupe von außen nicht zu erkennen.

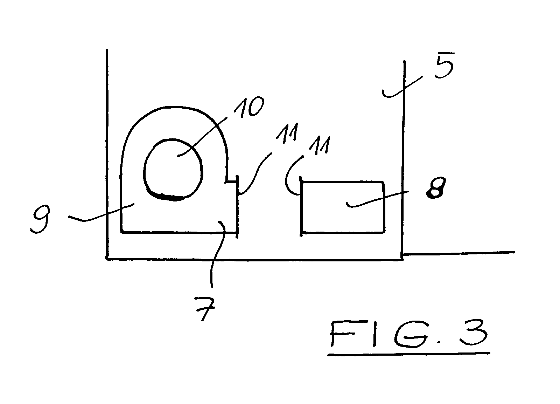

Die Figuren 2 und 3 zeigen den abtrennbaren Abschnitt 7 im mit dem übrigen Deckel verbundenen Zustand (Figur 2) und im vom Deckel getrennten Zustand (Figur 3).

## Patentansprüche

1. Geographische Karte, insbesondere Landkarte, mit einem Kartendeckel und einem mit diesem verbundenen, zusammengefalteten Kartenwerk, wobei der Kartendeckel einen nach innen umgeklappten, abtrennbaren Abschnitt aufweist, in den eine zum Betrachten des Kartenwerkes geeignete Lupe als Fenster integriert ist und der einen einen Handgriff für die Lupe bildenden Bereich aufweist, **dadurch gekennzeichnet, daß** der abtrennbare Abschnitt (7) des Kartendeckels (2) einen schmalen länglichen Handgriffteil (8) und einen gegenüber diesem erweiterten, die Lupe (10) als Fenster enthaltenden Lupenteil (9) aufweist und daß im Kartendeckel (2) zwei benachbarte Einschnitte (11) zum Einschieben und Fixieren des Handgriffteiles (8) mit der Lupe am Kartendeckel (2) vorgesehen sind.

2. Karte nach Anspruch 1, **dadurch gekennzeichnet, daß** der abtrennbare Abschnitt (7) doppellagig ausgebildet ist.

3. Karte nach Anspruch 1 oder 2, **dadurch gekennzeichnet, daß** die Lupe (10) als Folie ausgebildet ist.

4. Karte nach einem der Ansprüche 1 bis 3, **dadurch gekennzeichnet, daß** der abtrennbare Abschnitt (7) des Kartendeckels (2) abreißbar ausgebildet ist.

5. Karte nach einem der vorangehenden Ansprüche, **dadurch gekennzeichnet, daß** der Lupenteil (9) etwa teilkreisförmig ausgebildet ist.

6. Karte nach einem der vorangehenden Ansprüche, **dadurch gekennzeichnet, daß** der abtrennbare Abschnitt (7) P-förmig ausgebildet ist.

7. Karte nach einem der vorangehenden Ansprüche, **dadurch gekennzeichnet, daß** der abtrennbare Abschnitt (7) von einer Stirnseite des Kartendeckels (2) ausgeht.

8. Karte nach einem der vorangehenden Ansprüche, **dadurch gekennzeichnet, daß** der abtrennbare Abschnitt (7) an der Rückseite (5) des Kartendeckels (2) befestigt ist.

9. Karte nach einem der vorangehenden Ansprüche, **dadurch gekennzeichnet, daß** der abtrennbare Abschnitt (7) mit einer Längenmeßskala (13) versehen ist.
